# FASCICULE DE BREVET EUROPEEN

(11) **EP 0 950 828 B1**
(45) Date de publication et mention de la délivrance du brevet: **22.10.2003**
(21) Numéro de dépôt: 99400898.5
(22) Date de dépôt: 13.04.1999
(51) Int. Cl.: F16F 7/12, B60R 19/34, B60R 19/36

(54) **Absorbeur de chocs à section ondulée et pare-chocs muni d'un tel absorbeur de chocs**
Stossdämpfer mit gewelltem Querschnitt und Stossfänger mit solchem Dämpfer
Shock absorber with wavy section and bumper comprising such a shock absorber

(30) Priorité: 15.04.1998 FR 9804681
(43) Date de publication de la demande: 20.10.1999
(73) Titulaire: COMPAGNIE PLASTIC OMNIUM, 69007 Lyon (FR)
(72) Inventeur: Devilliers, Olivier, 52200 Langres (FR); Berger, Guillaume, 52200 Langres (FR); Roussel, Thierry, 52500 Montsesson (FR)
(74) Mandataire: Leszczynski, André

(56) Documents cités:
- DE-A- 4 239 460
- DE-A- 19 522 575
- DE-A- 19 537 186
- FR-A- 2 747 445
- US-A- 5 293 973

## Description

La présente invention concerne un absorbeur de chocs à section ondulée et un pare-chocs muni d'un tel absorbeur de chocs.

On sait que les pare-chocs des véhicules automobiles comportent une peau extérieure qui remplit d'une part une fonction esthétique, en prolongeant la caisse du véhicule dans sa partie inférieure avant ou arrière, et d'autre part une fonction mécanique, en constituant une surface d'impact pour d'éventuels chocs subis par le véhicule.

En retrait de la peau du pare-chocs, on prévoit un absorbeur de chocs dont le rôle est de reprendre les efforts transmis par la peau et d'en absorber la majeure partie de l'énergie avant de la répercuter sur les longerons du véhicule.

En général, les absorbeurs de chocs sont situés dans le prolongement des longerons et sont reliés par une traverse qui leur répercute les efforts subis par le pare-chocs. Ces absorbeurs sont réalisés sur mesure et sont assez coûteux de sorte que, sur certains véhicules de bas de gamme, ils sont remplacés par un système d'absorption de chocs de faible énergie, du type mousse de polypropylène, qui a pour seul rôle de limiter les dégâts occasionnés sur la peau du pare-chocs lors des petits chocs.

La demande DE 195 22 575 décrit un élément d'absorption de chocs ayant une forme tronconique.

La présente invention vise à fournir un absorbeur de chocs à haute énergie qui, en plus d'être économique, s'adapte très facilement sur différents véhicules.

La présente invention a pour objet un absorbeur de chocs tel que défini dans la revendication 1.

L'absorbeur de chocs selon l'invention tire avantage du fait qu'il se positionne entre la traverse et le bouclier, ce qui lui offre une grande surface de travail et réduit d'autant la pression à laquelle il est soumis lors d'un choc.

Ainsi, en ayant une section ondulée, une feuille de matière plastique ou d'un autre matériau suffit pour constituer un absorbeur de chocs efficace.

En outre, on comprend que le recours à une feuille de section ondulée permet une certaine modularité, la feuille pouvant être découpée aux dimensions souhaitées sans que l'architecture complète du pare-chocs n'ait à être redéfinie.

La section ondulée de l'absorbeur de chocs selon l'invention présente l'avantage d'être facile à mouler et à démouler dans un moule en deux parties dont l'une est mobile en translation suivant un axe.

En outre, les formes arrondies en saillie de la ou des faces de l'absorbeur réduisent ou même éliminent le phénomène de blanchiment qui se produit en cas de choc sur une pièce d'aspect en contact avec un absorbeur lorsque ce dernier comporte des arêtes rigides comme c'est le cas par exemple d'une structure en nid d'abeilles.

Dans un premier mode de réalisation de l'invention, l'absorbeur de chocs comporte des formes en relief ovoïdes.

Dans un second mode de réalisation, l'absorbeur de chocs présente une forme ondulée, laquelle est plus facile à injecter que la précédente du fait que les flux d'injection ne subissent dans ce cas qu'une très faible perturbation.

Si l'absorbeur de chocs selon l'invention est exclusivement constitué de formes dont la section est ondulée, on peut utiliser un moule simple, sans noyaux ni autres parties mobiles complexes.

En outre, pour obtenir une section ondulée, il n'est pas nécessaire que le moule présente un état de surface d'aussi bonne qualité que pour un démoulage de formes présentant des surfaces parallèles à la direction d'ouverture du moule, comme c'est le cas par exemple d'un renfort en nid d'abeille.

On peut obtenir l'absorbeur de chocs selon l'invention par tout procédé de transformation de matière plastique, c'est-à-dire non seulement par moulage mais également par thermoformage, par exemple, ou encore par extrusion s'il s'agit de réaliser un absorbeur de chocs ondulé.

Dans un mode de réalisation particulier de l'invention, de petits blocs de mousse viennent remplir les creux résultant de la présence des formes ondulées, pour accroître les performances d'absorption d'énergie de l'absorbeur de chocs.

Dans le même but, on peut prévoir des nervures au fond des ondulations ou des formes ovoïdes de l'absorbeur.

De telles nervures peuvent en outre être mises à profit pour protéger un équipement de lave-phare qui est traditionnellement logé dans un endroit très exposé aux chocs de l'avant du véhicule. A cet effet, on peut densifier localement le réseau de nervures pour mieux abriter l'équipement.

Dans un mode de réalisation de l'invention, l'absorbeur de chocs présente une symétrie, planaire par rapport à son plan médian ou centrale par rapport à un point de son plan médian, de sorte qu'il peut être positionné indifféremment dans un sens ou dans l'autre, ce qui facilite sa mise en place.

La présente invention a également pour objet un pare-chocs muni d'un absorbeur de chocs tel que décrit ci-dessus.

Dans un mode de réalisation particulier, l'absorbeur de chocs est intégré au pare-chocs, en étant par exemple issu du moulage de la peau du pare-chocs, laquelle comporte, en section transversale, un décrochement vers l'arrière formant ledit absorbeur

Dans ce cas, le pare-chocs comporte éventuellement un cache obturant l'ouverture qui apparaît dans la peau du fait de la présence de l'absorbeur de chocs intégré.

Dans un mode de réalisation particulier, dans lequel l'absorbeur de chocs comporte des formes en relief ovoïdes, ledit absorbeur de chocs est orienté dans le pare-chocs de manière que la concavité des formes ovoïdes soit tournée vers l'avant du véhicule.

Dans un autre mode de réalisation, compatible avec les précédents, le pare-chocs comporte des coins à ses extrémités latérales et les axes des formes ondulées ou ovoïdes de l'absorbeur de chocs situées au voisinage desdits coins sont orientés dans la direction statistiquement la plus probable des chocs, c'est-à-dire la direction sensiblement perpendiculaire à la surface de la peau du pare-chocs au droit de chaque forme ondulée ou ovoïde.

L'absorbeur de chocs selon l'invention trouve son application non seulement dans les pare-chocs, comme cela a déjà été indiqué, mais également dans toute pièce de carrosserie du véhicule telle qu'un panneau de portière ou une aile, notamment grâce au fait qu'il est très souple et peut s'implanter entre deux pièces en suivant leur galbe sans nécessiter de préparation particulière.

Dans le but de mieux faire comprendre l'invention, on va en décrire maintenant des modes de réalisation donnés à titre d'exemples non limitatifs, en référence au dessin annexé dans lequel:
- la figure 1 est une vue en perspective d'une portion d'un absorbeur de chocs selon un premier mode de réalisation de l'invention.
- la figure 2 est une vue en perspective d'une portion d'un absorbeur de chocs selon une variante de ce même mode de réalisation de l'invention.
- la figure 3 est une vue en perspective d'un pare-chocs muni d'un absorbeur de chocs intégré,
- la figure 4 est une section selon IV-IV de la figure 3,
- la figure 5 est une vue en coupe selon V-V de la figure 3,
- la figure 6 est une vue analogue à la figure 5 montrant une variante dans laquelle chaque forme ovoïde est renforcée par une nervure interne,
- la figure 7 est une vue en perspective d'un absorbeur de chocs selon un deuxième mode de réalisation de l'invention,
- la figure 8 est une section selon VIII-VIII de la figure 6, et
- la figure 9 est une vue en coupe de l'absorbeur des figures 7 et 8 en situation.

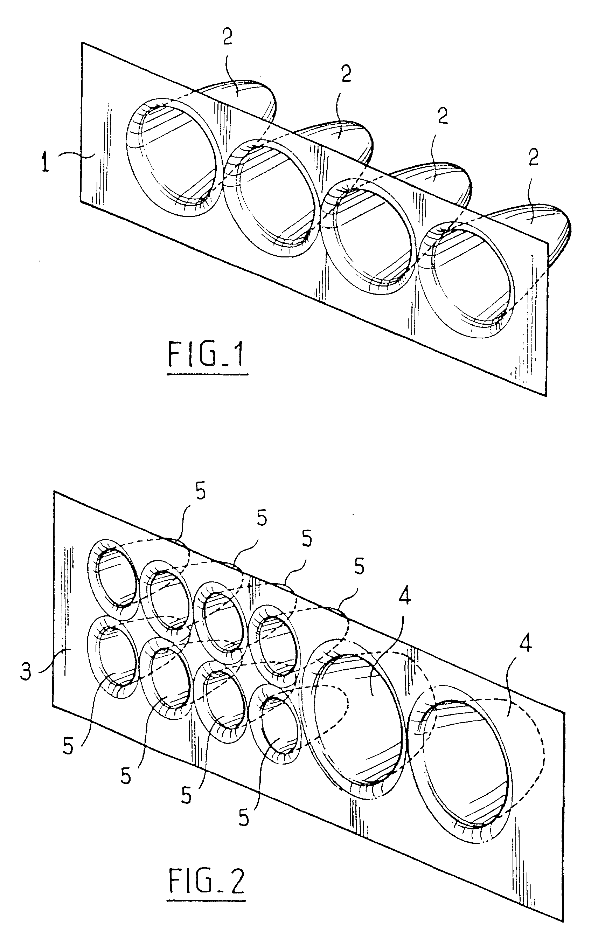

L'absorbeur de chocs représenté partiellement à la figure 1 est constitué par une plaque 1 en saillie de laquelle sont formées des protubérances de forme ovoïde 2, d'axes perpendiculaires à la plaque.

La forme de chaque protubérance 2 ainsi que l'épaisseur de la plaque 1 sont déterminées en fonction des performances mécaniques que l'on souhaite atteindre avec l'absorbeur de chocs.

Un tel absorbeur peut être obtenu par moulage sans aucune difficulté étant donné qu'il ne comporte aucune surface perpendiculaire à la plaque, ce qui facilite à la fois l'ouverture du moule et l'éjection de la pièce moulée.

L'absorbeur de chocs de la figure 1 peut également être obtenu par thermoformage selon des procédés connus.

Dans la variante représentée à la figure 2, l'absorbeur de chocs comporte également une plaque 3 en saillie de laquelle sont formées des protubérances.

Dans cette variante, on a prévu des protubérances de deux tailles à savoir des protubérances de grande taille 4 destinées à absorber l'énergie de chocs de faible énergie, et des protubérances de petite taille 5, qui sont agencées de façon plus dense et qui permettent d'absorber l'énergie de chocs plus importants.

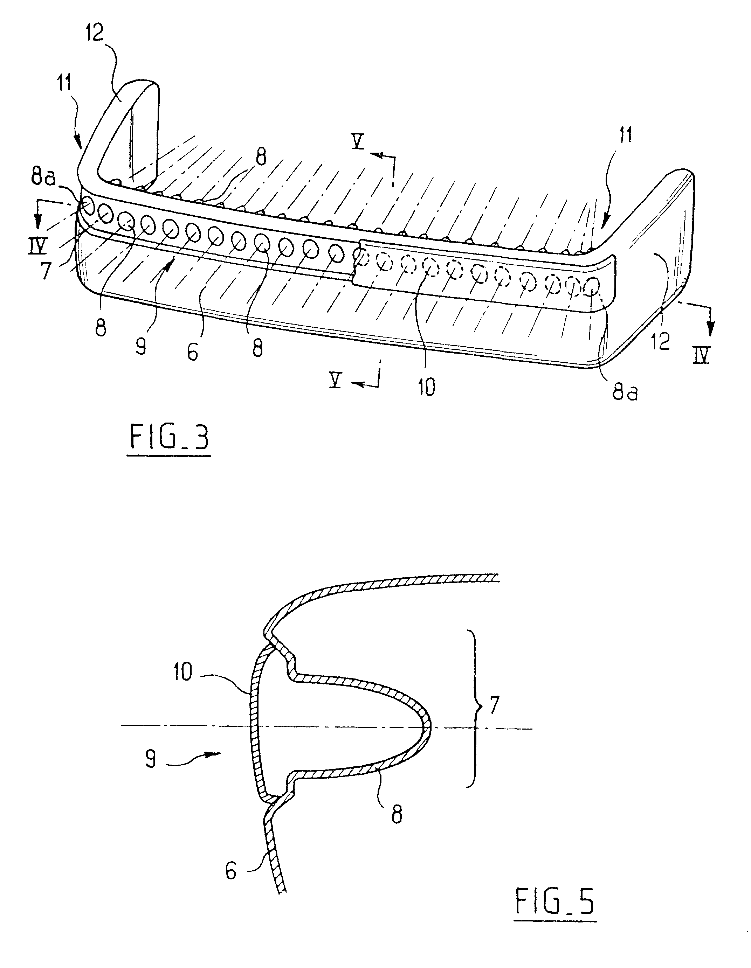

Le pare-chocs représenté aux figures 3 à 6 comporte une peau 6 et un absorbeur de chocs intégré 7 dont les formes ovoïdes 8 présentent leur concavité vers l'avant du véhicule.

Comme on le voit à la figure 5, l'absorbeur de chocs 7 est réalisé d'un seul tenant avec le reste du pare-chocs, lequel comporte de ce fait une ouverture longitudinale 9 sur sa face avant.

Un cache 10. sous forme de bandeau est rapporté pour obturer cette ouverture 9.

On comprend que la forme du pare-chocs, absorbeur de chocs compris, est adaptée à une réalisation par moulage du fait que cette forme est aisément démoulable.

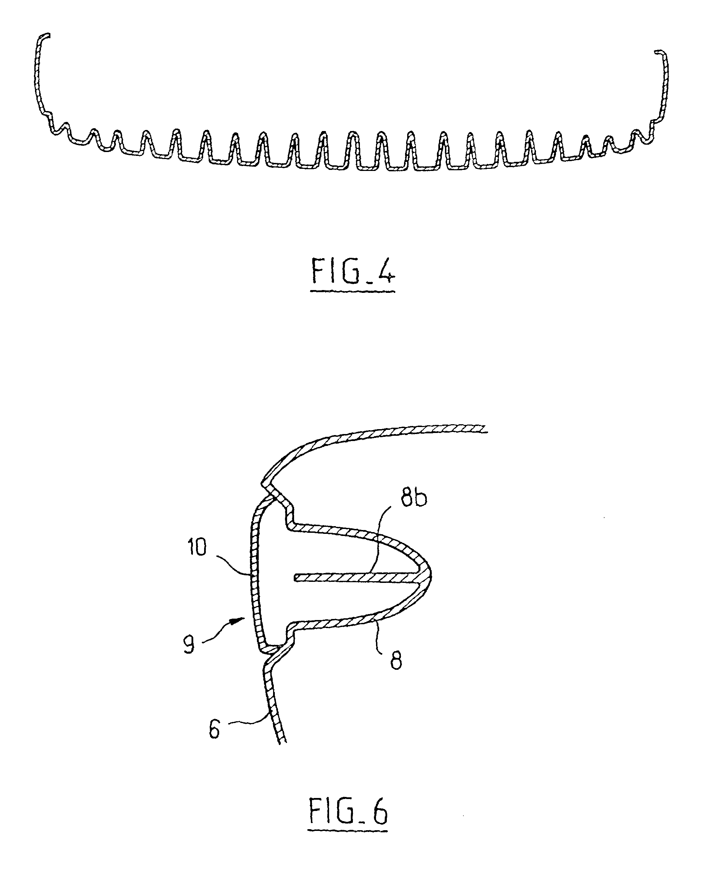

Dans la variante représentée à la figure 6, le fond de la forme ovoïde 8 comporte une nervure de renfort 8b.

Comme on le voit aux figures 3 et 4, le pare-chocs comporte des coins 11 à ses extrémités latérales et, au-delà de ces coins, des rebords destinés à recouvrir les parties latérales avant du véhicule (non représentées).

L'absorbeur de chocs comporte, dans chaque coin 11, des protubérances ovoïdes 8a dont les axes ne sont pas rigoureusement parallèles à l'axe longitudinal du véhicule. mais divergent légèrement de manière que les formes ovoïdes correspondantes soient orientées dans la direction la plus probable des chocs qui est sensiblement la direction perpendiculaire à la surface de la peau 6 du pare-chocs au droit de chaque forme ovoïde.

En d'autres termes, les formes ovoïdes des coins de l'absorbeur de chocs sont orientées pour résister à des chocs en coin.

Néanmoins, comme on le voit à la figure 4, ces deux formes ovoïdes 8a sont conformées pour permettre le démoulage du pare-chocs sans contre-dépouille, par un simple mouvement de translation dans l'axe du véhicule, de manière que le moulage du pare-chocs demeure une opération simple.

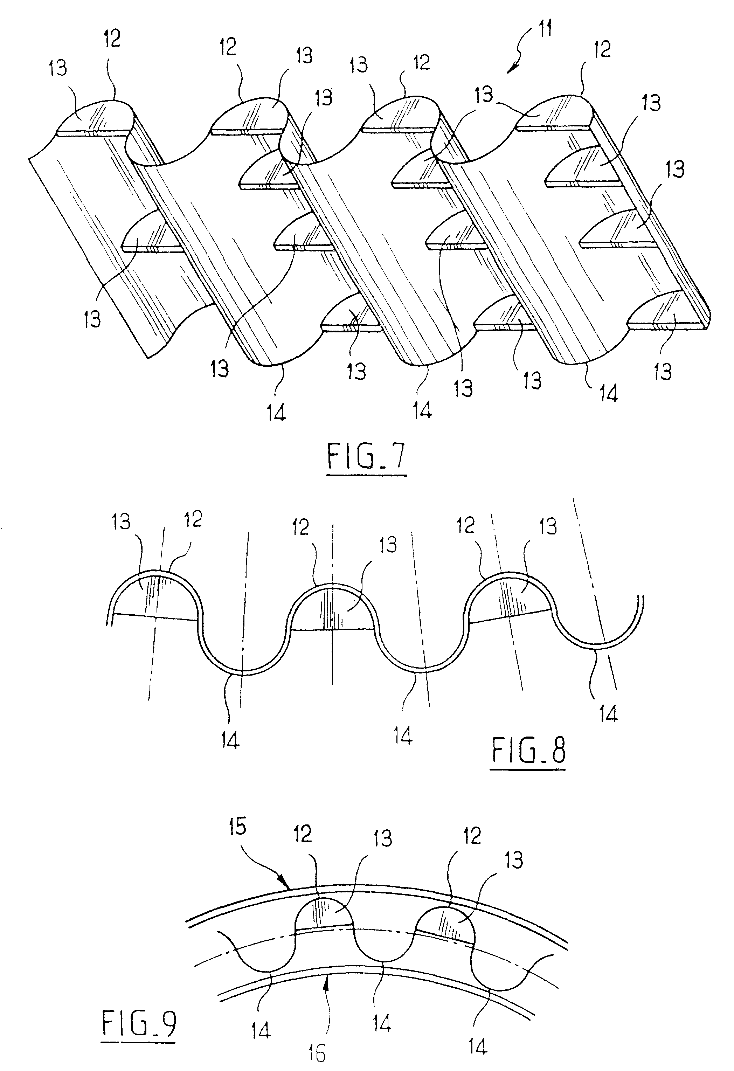

L'absorbeur de chocs des figures 7 à 9 se présente sous la forme d'une plaque ondulée 11.

Les ondulations supérieures 12 (par rapport au dessin) sont renforcées par des nervures 13 parallèles à la direction longitudinale de l'absorbeur, ces nervures ayant pour fonction de lutter contre l'écrasement de la moitié supérieure de l'absorbeur.

Cependant, du fait de la présence de ces nervures, les ondulations supérieures de l'absorbeur n'offrent aucune latitude pour l'incurvation de ce dernier selon le galbe d'une pièce d'aspect à renforcer.

Les déformations résultant de cette incurvation sont donc subies par les ondulations inférieures 14 de l'absorbeur.

De plus, comme cela a déjà été expliqué, les ondulations peuvent être localement plus nombreuses pour protéger un équipement de lave-phare.

Dans le cas particulier d'un pare-chocs arrière de véhicule break, une spécification des constructeurs automobiles exige que la partie supérieure horizontale du pare-chocs, également désignée plage supérieure, puisse supporter un poids important du fait qu'elle se situe à hauteur du seuil de chargement de l'ouverture du coffre. Les nervures 13 peuvent alors participer au maintien de cette plage supérieure, en étant positionnées au bord supérieur de l'absorbeur, comme on le voit à la figure 7.

Comme on le voit sur la figure 9, l'absorbeur peut se positionner entre la peau 15 et une traverse 16 d'un pare-chocs, en épousant son galbe, les ondulations inférieures 14 étant en contact avec la traverse.

L'absorbeur selon l'invention s'avère particulièrement intéressant lorsqu'il s'agit, comme c'est de plus en plus souvent le cas, de loger une structure d'absorption de chocs entre une peau et une traverse de pare-chocs espacées de seulement 30 à 40 mm. A cet égard, l'absorbeur de chocs selon l'invention remplace très avantageusement les structures en nid d'abeilles qui, certes, peuvent s'intercaler dans un espace aussi réduit, mais sont trop rigides pour procurer une absorption efficace des chocs de faible énergie.

Il est bien entendu que les modes de réalisation qui viennent d'être décrits ne présentent aucun caractère limitatif et qu'ils pourront recevoir toutes modifications désirables sans sortir pour cela du cadre de l'invention.

## Revendications

1. Absorbeur de chocs (1, 7, 11) pour véhicule automobile, destiné à s'intercaler dans un pare-chocs entre une traverse reliant les deux longerons du véhicule et un bouclier du pare-chocs, **caractérisé par le fait qu'**il est constitué par une feuille présentant une section ondulée (2, 4, 5, 8, 12, 14) de manière à définir une pluralité de formes arrondies en saillie, ces formes ayant chacune une concavité, chaque concavité ayant un axe qui est sensiblement parallèle à la direction probable des chocs.

2. Absorbeur de chocs selon la revendication 1, **caractérisé par le fait qu'**il comporte des formes en relief ovoïdes (2,4,5,8).

3. Absorbeur de chocs selon la revendication 1, **caractérisé par** la fait qu'il présente une forme ondulée (12, 14).

4. Absorbeur de chocs selon l'une quelconque des revendications 1 à 3, **caractérisé par le fait que** de petits blocs de mousse viennent remplir les creux résultant de la présence des formes ondulées, pour accroître les performances d'absorption d'énergie de l'absorbeur de chocs.

5. Absorbeur de chocs selon l'une quelconque des revendications 1 à 4, **caractérisé par le fait qu'**il comporte des nervures (8b, 13) au fond des ondulations (12) ou des formes ovoïdes (8).

6. Absorbeur de chocs selon l'une quelconque des revendications 1 à 5, **caractérisé par le fait qu'**il présente une symétrie, planaire par rapport à son plan médian ou centrale par rapport à un point de son plan médian.

7. Absorbeur de chocs selon l'une quelconque des revendications 1 à 6, **caractérisé par le fait qu'**il peut s'implanter entre deux pièces en suivant leur galbe sans nécessiter de préparation particulière.

8. Pare-chocs muni d'un absorbeur de chocs selon l'une quelconque des revendications 1 à 7.

9. Pare-chocs selon la revendication 8, **caractérisé par le fait que** l'absorbeur de chocs (7) est intégré au pare-chocs.

10. Pare-chocs selon la revendication 9, **caractérisé par le fait qu'**il est issu du moulage de la peau (6) du pare-chocs, laquelle comporte, en section transversale, un décrochement vers l'arrière formant ledit absorbeur.

11. Pare-chocs selon la revendication 10, **caractérisé par le fait qu'**il comporte un cache (10) obturant l'ouverture (9) qui apparaît dans la peau (6) du fait de la présence de l'absorbeur de chocs intégré (7).

12. Pare-chocs selon l'une quelconque des revendications 8 à 11, dans lequel l'absorbeur de chocs comporte des formes en relief ovoïdes, **caractérisé par le fait que** l'absorbeur de chocs (7) est orienté dans le pare-chocs de manière que la concavité des formes ovoïdes (8) soit tournée vers l'avant du véhicule.

13. Pare-chocs selon l'une quelconque des revendications 8 à 12, **caractérisé par le fait qu'**il comporte des coins (11) à ses extrémités latérales et que les axes des formes ondulées ou ovoïdes (8a) de l'absorbeur de chocs situées au voisinage desdits coins sont orientés dans la direction statistiquement la plus probable des chocs, c'est-à-dire la direction sensiblement perpendiculaire à la surface de la peau (6) du pare-chocs au droit de chaque forme ondulée ou ovoïde (8a).

## Patentansprüche

1. Stoßdämpfer (1, 7, 11) für Kraftfahrzeuge, der in einem Stoßfänger zwischen einem die beiden Längsträger des Fahrzeugs verbindenden Querträger und einem Schild des Stoßfängers eingefügt werden soll, **dadurch gekennzeichnet, dass** er von einer Folie gebildet ist, die einen gewellten Querschnitt (2, 4, 5, 8, 12, 14) aufweist, so dass eine Vielzahl vorspringender abgerundeter Formen definiert wird, wobei eine jede dieser Formen eine Konkavität aufweist, wobei jede Konkavität eine Achse hat, die im Wesentlichen parallel zur wahrscheinlichen Richtung der Stöße verläuft.

2. Stoßdämpfer nach Anspruch 1, **dadurch gekennzeichnet, dass** er eiförmige Reliefformen (2, 4, 5, 8) aufweist.

3. Stoßdämpfer nach Anspruch 1, **dadurch gekennzeichnet, dass** er eine Wellenform (12, 14) aufweist.

4. Stoßdämpfer nach irgendeinem der Ansprüche 1 bis 3, **dadurch gekennzeichnet, dass** kleine Schaumblöcke die sich aus dem Vorhandensein der Wellenformen ergebenden Mulden ausfüllen, um die Energieaufnahmeleistungen des Stoßdämpfers zu erhöhen.

5. Stoßdämpfer nach irgendeinem der Ansprüche 1 bis 4, **dadurch gekennzeichnet, dass** er am Grund der Wellen (12) oder der eiförmigen Formen (8) Rippen (8b, 13) aufweist.

6. Stoßdämpfer nach irgendeinem der Ansprüche 1 bis 5, **dadurch gekennzeichnet, dass** er eine in Bezug auf seine Mittelebene planare Symmetrie oder in Bezug auf einen Punkt seiner Mittelebene zentrale Symmetrie aufweist.

7. Stoßdämpfer nach irgendeinem der Ansprüche 1 bis 6, **dadurch gekennzeichnet, dass** er - ohne, dass es einer besonderen Vorbereitung bedarf - zwischen zwei Teilen eingesetzt werden kann, indem er ihrer Kontur folgt.

8. Stoßfänger, der mit einem Stoßdämpfer nach irgendeinem der Ansprüche 1 bis 7 ausgestattet ist.

9. Stoßfänger nach Anspruch 8, **dadurch gekennzeichnet, dass** der Stoßdämpfer (7) in den Stoßfänger integriert ist.

10. Stoßfänger nach Anspruch 9, **dadurch gekennzeichnet, dass** er aus dem Formen der Außenhaut (6) des Stoßfängers hervorgegangen ist, die im Querschnitt einen den genannten Stoßdämpfer bildenden Versatz nach hinten aufweist.

11. Stoßfänger nach Anspruch 10, **dadurch gekennzeichnet, dass** er eine Abdeckung (10) aufweist, welche die Öffnung (9) verschließt, die in der Außenhaut (6) aufgrund des Vorhandenseins des integrierten Stoßdämpfers (7) erscheint.

12. Stoßfänger nach irgendeinem der Ansprüche 8 bis 11, bei dem der Stoßdämpfer eiförmige Reliefformen aufweist, **dadurch gekennzeichnet, dass** der Stoßdämpfer (7) in dem Stoßfänger derart ausgerichtet ist, dass die Konkavität der eiförmigen Formen (8) zum Vorderteil des Fahrzeugs gewandt ist.

13. Stoßfänger nach irgendeinem der Ansprüche 8 bis 12, **dadurch gekennzeichnet, dass** er an seinen Seitenenden Ecken (11) aufweist und dass die Achsen der in der Nähe der genannten Ecken gelegenen gewellten oder eiförmigen Formen (8a) des Stoßdämpfers in der statistisch wahrscheinlichsten Richtung der Stöße ausgerichtet sind, d.h. in der im Wesentlichen senkrecht zur Oberfläche der Außenhaut (6) des Stoßfängers verlaufenden Richtung, im rechten Winkel zu jeder gewellten oder eiförmigen Form (8a).

## Claims

1. A shock absorber (1, 7, 11) for a motor vehicle, to be interposed in a bumper between a cross-member interconnecting the two side rails of the vehicle and a bumper shield, **characterized by** the fact that it is constituted by a sheet of undulating section (2, 4, 5, 8, 12, 14) in order to define a plurality of rounded protruding shapes, each shape having a concavity, and each concavity having an axis which is substantially parallel to the likely direction of the impacts.

2. A shock absorber according to claim 1, **characterized by** the fact that it includes egg-shapes in relief (2, 4, 5, 8).

3. A shock absorber according to claim 1, **characterized by** the fact that it is corrugated in shape (12, 14).

4. A shock absorber according to any one of claims 1 to 3, **characterized by** the fact that small blocks of foam fill the recesses that result from the presence of the undulating shapes, so as to increase the energy-absorbing performance of the shock absorber.

5. A shock absorber according to any one of claims 1 to 4, **characterized by** the fact that it includes ribs (8b, 13) in the bottoms of the corrugations (12) or of the egg-shapes (8).

6. A shock absorber according to any one of claims 1 to 5, **characterized by** the fact that it possesses symmetry, planar relative to its midplane, or central relative to a point of its midplane.

7. A shock absorber according to any one of claims 1 to 6, **characterized by** the fact that it can be installed between two parts to follow the curvature thereof without requiring any special preparation.

8. A bumper fitted with a shock absorber according to any one of claims 1 to 7.

9. A bumper according to claim 8, **characterized by** the fact that the shock absorber (7) is integrated in the bumper.

10. A bumper according to claim 9, **characterized by** the fact that it is made by molding the skin (6) of the bumper, which skin includes, in cross-section, a setback forming said shock absorber.

11. A bumper according to claim 10, **characterized by** the fact that it includes a cover (10) closing the opening (9) which appears in the skin (6) because of the presence of the integrated shock absorber (7).

12. A bumper according to any one of claims 8 to 11, in which the shock absorber has egg-shapes in relief, the bumper being **characterized by** the fact that the shock absorber (7) is placed in the bumper in such a manner that the concave sides of the egg-shapes (8) face towards the front of the vehicle.

13. A bumper according to any one of claims 8 to 12, **characterized by** the fact that it includes corners (11) at its side ends and that the axes of the corrugated shapes or egg-shapes (8a) of the shock absorber situated in the vicinity of said corners face in the direction from which impacts are statistically most likely, i.e. a direction substantially perpendicular to the surface of the skin (6) of the bumper overlying each corrugated shape or egg-shape (8a).
